# FASCICULE DE BREVET EUROPEEN

(11) **EP 0 670 565 B1**
(45) Date de publication et mention de la délivrance du brevet: **05.01.2000**
(21) Numéro de dépôt: 95400466.9
(22) Date de dépôt: 03.03.1995
(51) Int. Cl.: G08G 1/09

(54) **Procédé et dispositif de sélection d'informations routières**
Verfahren und Vorrichtung zur Wahl von Verkehrsnachrichten
Method and device for the selection of traffic information

(30) Priorité: 04.03.1994 FR 9402500
(43) Date de publication de la demande: 06.09.1995
(73) Titulaire: RENAULT, 92109 Boulogne-Billancourt (FR)
(72) Inventeur: Delos, Michel, F-93100 Montreuil (FR); Le Maire, Sylvie, 92320 Chatillon (FR)

(56) Documents cités:
- EP-A- 0 290 679
- EP-A- 0 564 353
- FR-A- 2 651 352
- VNIS '92;VEHICLE NAVIGATION & INFORMATION SYSTEMS, SEPTEMBER 2-4, 1992, IEEE US, page 8 DE GROOT 'RHINE-CORRIDOR AN RDS-TMC PILOT FOR RADIO TRAFFIC INFORMATION'

## Description

La présente invention se rapporte au domaine de l'aide à la conduite par réception d'informations routières, dites "informations de trafic", à bord d'un véhicule.

Plus précisément, elle concerne un procédé et un dispositif de sélection d'informations routières tenant compte du trajet de l'usager.

Lea filtrage des informations routières émises par un opérateur, tel que le réseau RDS (Radio Data System) en fonction du trajet retenu par l'usager est une disposition connue. La demande de brevet FR 93-00499 de la demanderesse, non publiée à ce jour, propose notamment un procédé de sélection d'informations routières, consistant à définir un "filtre", en fonction de critères de sélection choisis par l'automobiliste, tels que des critères de lieu, de temps ou de nature des informations, et à filtrer les informations reçues, pour ne retenir que celles répondant aux critères choisis.

Par ailleurs, il a déjà été proposé dans des systèmes d'aide à la conduite exploitant des cartes routières mémorisées, et des algorithmes de calcul d'itinéraire, de découper une région donnée en plusieurs zones, et de définir dans chaque zone des paramètres correspondant à des carrefours et à des voies reliant ces carrefours. La publication FR 2 677 7456, décrit à ce sujet un procédé et un dispositif de calcul d'itinéraire selon lequel on sélectionne les zones utiles au calcul de l'itinéraire en fonction des points de départ et d'arrivée choisis par l'utilisateur, et on calcule un couloir autour de l'itinéraire à partir des informations en mémoire, relatives aux zones sélectionnées. Il est ainsi possible de réduire considérablement l'ensemble des données relatives aux voies et aux noeuds routiers concernés, donc de simplifier les moyens de calcul et de réduire les temps de traitement.

L'exploitation du quadrillage d'une carte routière pour la sélection des informations routières relatives à un itinéraire, n'est pas envisageable pour les raisons suivantes :
- le quadrillage proposé fait abstraction du réseau routier, dont la densité est extrêmement variable selon les secteurs géographiques concernés,
- étant systématique, le quadrillage n'autorise pas les changements d'échelles nécessaires pour traiter de façon homogène des trajets urbains, régionaux, ou autoroutiers.

La présente invention a pour but de sélectionner des informations routières en tenant compte du secteur concerné, du réseau routier, et du réseau d'informations.

Elle propose à cet effet un procédé de sélection d'informations routières tel que défini par la revendication 1.

Selon un mode de réalisation de l'invention, l'indication d'un lien routier est assortie d'un numéro d'ordre identifiable par un logiciel de calcul d'itinéraire.

Selon un mode de réalisation de l'invention, l'indication d'un lien routier conduisant à une localisation répertoriée, est assortie du nombre de liaisons non prises en compte par l'opérateur, conduisant à celle-ci.

Selon un mode de réalisation de l'invention, l'indication d'un lien routier conduisant à une localisation répertoriée est assortie du nom de chaque localisation d'origine, et de sa distance.

L'invention concerne également un dispositif, conçu pour la mise en oeuvre d'un procédé de sélection d'informations, comportant un récepteur d'informations placé sous le contrôle d'un calculateur central appliquant un algorithme de calcul d'itinéraire et un algorithme de sélection des informations en fonction de l'itinéraire calculé, sur la base des données géographiques complémentaires à celles de l'opérateur, stockées dans une mémoire de masse, et sur la base des indications de départ et de destination fournies par l'usager au moyen d'une interface reliée audit calculateur.

L'invention sera mieux comprise à la lecture de la description suivante d'un mode de réalisation particulier de celle-ci, en liaison avec les dessins annexés, sur lesquels :
- la figure 1 se rapporte au dispositif proposé,
- la figure 2 illustre le calcul d'itinéraire, selon le critère du trajet le plus court,
- la figure 3 illustre le procédé de sélection de l'invention, et
- la figure 4 se rapporte à une base de données routières enrichie conformément à l'invention.

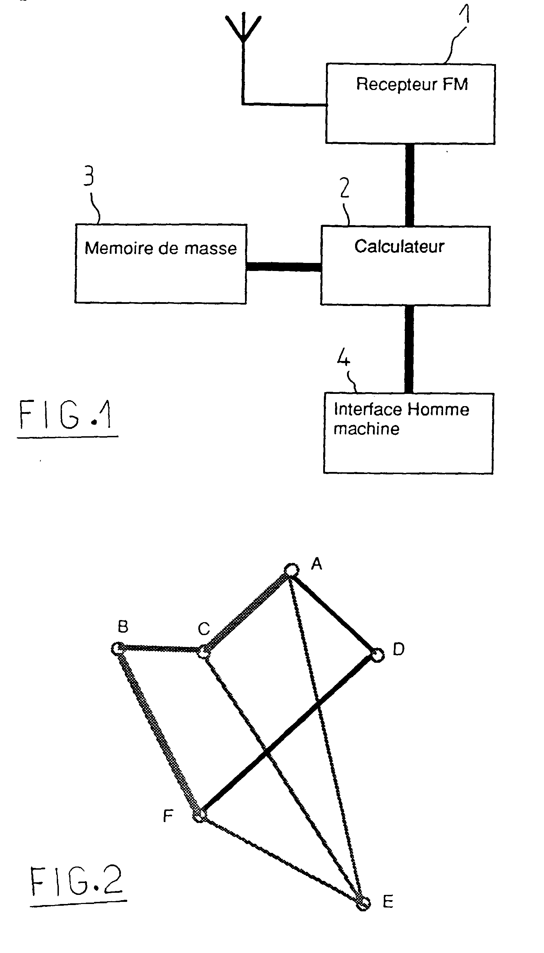

Le dispositif de sélection d'informations représenté sur la figure 1 comporte un récepteur radio 1 de type connu sélectionnant automatiquement ou non des messages diffusés sur le canal RDS TMC. Le récepteur 1 est placé sous le contrôle d'un calculateur central 2 relié également à un lecteur de mémoire de masse 3 telle qu'une carte à mémoire, un disque dur, etc..., et à une interface 4 entre le dispositif et l'usager, incluant par exemple un afficheur graphique ou alphanumérique, un appareil de synthèse de la parole et un organe de désignation du type clavier, cadre tactile, stylo optique, etc..., permettant à l'utilisateur de programmer son trajet. Outre le contrôle du récepteur radio 1, le calculateur 2 assure la gestion de l'interface 4, en déroulant notamment les algorithmes suivants :
- un algorithme de calcul d'itinéraire et d'établissement de l'ensemble des critères de sélection d'informations recevant l'appellation globale de "filtre", applicable à chaque trajet programmé,
- un algorithme de filtrage établi en permanence.

Le problème du calcul d'un itinéraire consiste classiquement à trouver le chemin optimal entre deux points selon un critère déterminé (temps de parcours, kilométrage, altitude, etc...). La figure 2 illustre à ce sujet un cas simple, selon lequel le conducteur peut rejoindre à partir du point A sa destination F en passant par différents points intermédiaires B, C, D, E répertoriés dans la mémoire de masse du véhicule. Si le critère de calcul retenu appliqué est celui de la distance, le trajet sélectionné sera le plus court, soit A, D F. En revanche, l'application d'autres critères tels que l'utilisation préférentielle des autoroutes où la recherche des sites touristiques, pourra conduire à la sélection d'un autre itinéraire, tel que A, C, B, F.

Les algorithmes de calcul d'itinéraire utilisés actuellement sont applicables à des bases de données géographiques permettant de stocker des cartes routières simplifiées ou non, constituées à l'image de la figure 2 d'un ensemble de noeuds et d'axes routiers connexes, reliant les différents noeuds du réseau. Le plus souvent, chaque axe est orienté et sa longueur est évaluée. L'ensemble de ces informations constitue des bases de données généralement de taille importante (plusieurs Méga octets pour la région parisienne).

L'ensemble des informations de trafic diffusés sur le réseau RDS-TMC par l'opérateur correspondant, comprend notamment l'annonce des problèmes de circulation, l'estimation du trafic, la météo, etc... Ce réseau fait aujourd'hui l'objet d'un protocole permettant leur diffusion sous forme de données numériques jusqu'aux récepteurs embarqués sur véhicule, communiquant dans la bande FM. Ce protocole, obéissant à une norme internationale dite norme ALERT-C structure les informations de trafic en plusieurs champs, parmi lesquels :
- un champ de localisation de l'information (par exemple Place de la Concorde), et
- un champ "ampleur" du problème de circulation rencontré, permettant de décrire sa dimension linéaire sur le réseau.

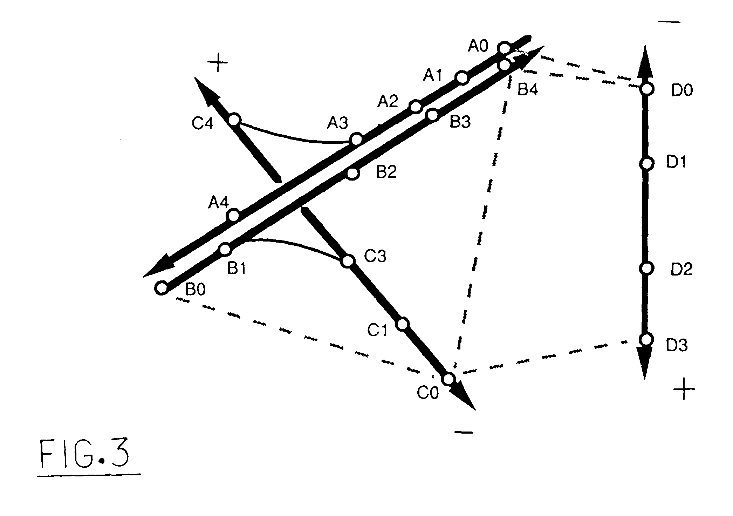

L'émission des informations de trafic par l'opérateur RDS - TMC s'effectue donc en référence à une base de données géographiques propre au système RDS, contenant un ensemble de localisations (points du réseau routier définis par exemple par une entrée ou une sortie d'autoroute, un parking, une place connue, un point de comptage de véhicules, etc....), chaque localisation RDS-TMC étant identifiée par un code utilisant 16 bits. Selon cette base de données géographiques, les chaînages de trajet point à point sont définis axe par axe, chaque axe étant une voie de circulation identifiée et orientée entre deux points. Chaque axe de circulation, représenté en traits pleins sur la figure 3 peut contenir un chaînage unique (cas des nationales) : si l'axe est à sens unique, son sens positif sera son sens de circulation tandis que dans le cas contraire on choisira comme sens positif une orientation géographique arbitraire (par exemple Nord-Sud/Est-Ouest). Les autoroutes françaises sont en revanche répertoriées comme axe de circulation à double chaînage, le sens positif de chaque chaînage étant son sens de circulation. L'ensemble des informations contenues dans la base de données qui vient d'être décrite est aujourd'hui disponible sous forme d'une table, dite table de références RDS-TMC.

La carte routière simplifiée structurée par l'opérateur RDS-TMC, est donc constituée d'un ensemble d'axes orientés, concourants ou non, établissant un chaînage entre des localisations répertoriées.

La figure 3 résume de façon simple les différents cas possibles, en faisant apparaître une autoroute dont les deux voies de circulation ont des codes RDS-TMC différents A et B, un axe C croisant l'autoroute et un axe D non concourants avec les axes précédents.

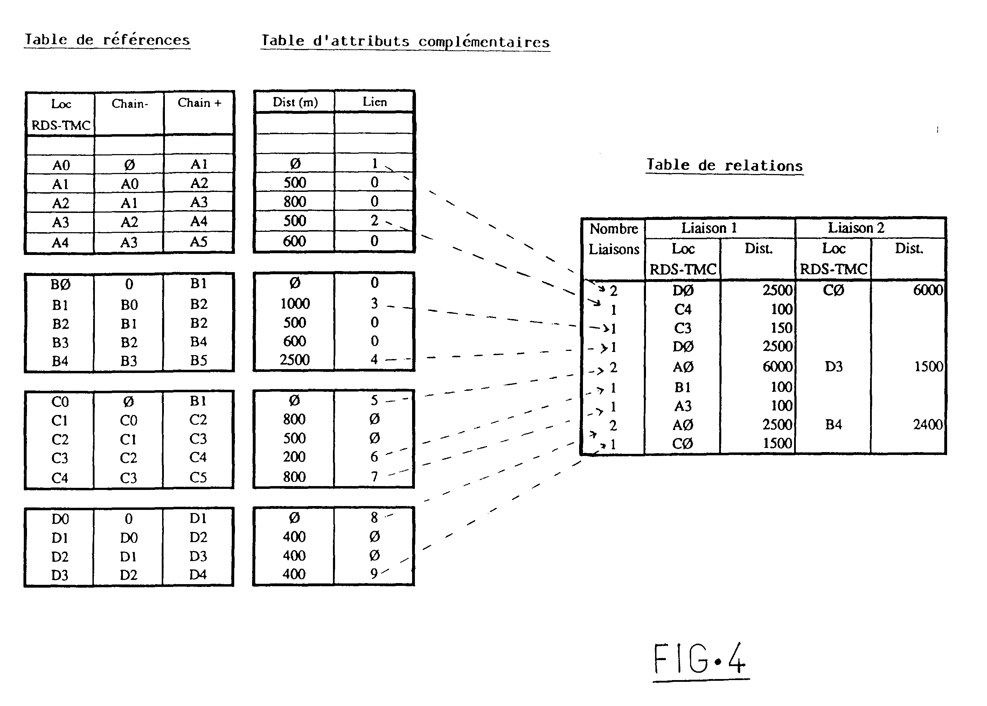

Comme le montre la première colonnes de la figure 4, la table de référence RDS-TMC correspondante regroupe les localisations axe par axe et indique pour chaque point, le point voisin en direction positive ("chaîn +") et le point voisin en direction négative ("chaîn -).

La présente invention propose de compléter la table de références RDS-TMC de façon à la rendre exploitable par un algorithme de calcul d'itinéraire. La table de références est à cet effet enrichie par une table d'attributs complémentaires (cf colonne centrale de la figure 4), indiquant la distance entre chaque localisation RDS et celle qui la précède dans le chaînage du réseau RDS, ainsi que l'identification par un numéro d'ordre, des points bénéficiant d'un lien routier avec un autre point répertorié, sur une voie de circulation non répertoriée dans le réseau RDS-TMC. Conformément à l'invention, une table dite "de relations" (colonne de droite de la figure 4), précise en outre le nombre de liaisons aboutissant à chaque point bénéficiant d'un "lien" identifié, la localisation d'origine, et la longueur de chaque liaison.

L'ensemble des données géographiques regroupées dans la table de références RDS, la table d'attributs complémentaires et la table de relations illustrées par la figure 4 permet de façon simple et extrêmement souple de disposer d'une base de données routières ne comprenant pas de localisations complémentaires par rapport aux localisations répertoriées par l'opérateur RDS, tout en étant représentative du réseau routier réel. Cette base de données est exploitable par des algorithmes de calcul d'itinéraires connus de façon à établir, en référence au réseau RDS-TMC, un itinéraire point à point reliant n'importe quel point de départ à n'importe quelle destination répertoriée par celui-ci.

Sur la base des localisations RDS sélectionnées par le calculateur d'itinéraires, il est ainsi possible de filtrer en application d'algorithmes de "filtrage" connus, les informations de trafic se rapportant au trajet de l'usager.

En conclusion, il faut souligner que le procédé et le dispositif de sélection d'informations routières proposés par l'invention reposent sur l'utilisation de la table de références du réseau RDS-TMC, répertoriant toutes les localisations de celui-ci. Conformément à l'invention, cette table, intégrée et reconnue par tous les récepteurs RDS-TMC commercialisés, est complétée de façon simple à l'aide d'outils logiques, tels que la table complémentaire et le tableau de relations complémentaires décrits ci-dessus à titre d'exemples non limitatifs, exploitables par des algorithmes de calcul d'itinéraire et de filtrage connus. L'invention présente donc le double avantage de faire l'économie d'une base de données géographiques spécifique et d'assurer un filtrage des informations, correspondant rigoureusement aux localisations RDS concernées par le trajet de l'usager.

## Revendications

1. Procédé de sélection d'informations routières diffusées par un opérateur et relatives à des localisations géographiques répertoriées par ledit opérateur sur des axes de circulation orientés, de façon à pouvoir être regroupées dans une table de références faisant apparaître un chaînage entre celles-ci, et sélectionnées sur un itinéraire indiqué par l'usager, caractérisé en ce que la table de références est complétée par l'indication, pour chaque localisation répertoriée, de la distance entre celle-ci et la localisation précédente, conformément au chaînage établi par l'opérateur et par l'indication, pour chaque localisation concernée, de liens routiers conduisant à celle-ci, non pris en compte sur les axes de circulation définis par l'opérateur.

2. Procédé de sélection selon la revendication 1, caractérisé en ce que l'indication d'un lien routier est assortie d'un numéro d'ordre identifiable par un logiciel de calcul d'itinéraire.

3. Procédé de sélection selon les revendications 1 ou 2, caractérisé en ce que l'indication d'un lien routier conduisant à une localisation du réseau est assortie du nombre de liaisons, non prises en compte par l'opérateur, conduisant à celle-ci.

4. Procédé de sélection selon les revendications 1, 2 ou 3, caractérisé en ce que l'indication d'un lien routier conduisant à une localisation répertoriée est assortie du nom de chaque localisation d'origine, et de sa distance.

## Patentansprüche

1. Verfahren zur Auswahl von Verkehrsnachrichten, die von einem Operator ausgesandt werden und die sich auf geographische Örtlichkeiten beziehen, welche vom Operator entlang ausgerichteter Verkehrsachsen erfaßt werden, derart, daß sie in einer Referenztabelle zusammengefaßt sind, die eine Verkettung zwischen ihnen erscheinen läßt und die ausgewählt werden entlang eines vom Benutzer angezeigten Leitweges, dadurch gekennzeichnet, daß die Referenztabelle vervollständigt wird durch die Anzeige, für jede erfaßte Örtlichkeit, der Distanz zwischen ihr und der vorhergehenden Örtlichkeit entsprechend der vom Operator aufgestellten Verkettung und durch die Anzeige für jede derartige Örtlichkeit der Straßenverbindungen, die zu ihr führen, ohne Berücksichtigung der vom Operator festgelegten Verkehrsachsen.

2. Verfahren zur Auswahl nach Anspruch 1, dadurch gekennzeichnet, daß die Anzeige einer Straßenverbindung durch eine laufende Ordnungszahl erstellt wird, die durch ein Rechenprogramm für den Leitweg auffindbar ist.

3. Verfahren zur Auswahl nach Ansprüchen 1 oder 2, dadurch gekennzeichnet, daß die Anzeige einer Straßenverbindung, die zu einer Örtlichkeit des Netzes führt, erstellt wird durch die Anzahl der Wege, die unberücksichtigt vom Operator zu ihr führen.

4. Verfahren zur Auswahl nach Ansprüchen 1, 2 oder 3, dadurch gekennzeichnet, daß die Anzeige einer Straßenverbindung, die zu einer erfaßten Örtlichkeit führt, erstellt wird nach dem Namen jeder Ursprungsörtlichkeit und ihrer Distanz.

## Claims

1. A method of selection of route information broadcast by an operator and relating to geographical locations listed by this operator on oriented traffic routes, such that they can be grouped in a table of references showing a sequence therebetween, and selected with respect to an itinerary indicated by the user, characterised in that the table of references is supplemented by the indication, for each location listed, of the distance between that location and the preceding location, in accordance with the sequence drawn up by the operator and by the indication, for each location concerned, of road links leading thereto, but not taken into account in the traffic routes defined by the operator.

2. A method of selection as claimed in claim 1, characterised in that the indication of a road link is accompanied by a serial number that can be identified by itinerary computing software.

3. A method of selection as claimed in claims 1 or 2, characterised in that the indication of a road link leading to a location of the network is accompanied by the number of links, not taken into account by the operator, leading thereto.

4. A method of selection as claimed in claims 1, 2 or 3, characterised in that the indication of a road link leading to a listed location is accompanied by the name of each original location and its distance.
